# EUROPÄISCHE PATENTSCHRIFT

(11) **EP 0 721 248 B1**
(45) Veröffentlichungstag und Bekanntmachung des Hinweises auf die Patenterteilung: **09.06.1999**
(21) Anmeldenummer: 96200009.7
(22) Anmeldetag: 03.01.1996
(51) Int. Cl.: H02K 16/02

(54) **Elektrische Antriebsvorrichtung mit mehr als einem permanentmagnetisch erregten Rotor**
Electric drive with more than one permanent magnet excited rotor
Entraînement électrique avec plus qu'un rotor excité par un aimant permanent

(30) Priorität: 04.01.1995 DE 19500112
(43) Veröffentlichungstag der Anmeldung: 10.07.1996
(73) Patentinhaber: Philips Patentverwaltung GmbH, 22335 Hamburg (DE); Koninklijke Philips Electronics N.V., 5621 BA Eindhoven (NL)
(72) Erfinder: Elferich, Reinhold, c/o Philips Patentverwalt.GmbH, D-22335 Hamburg (DE)
(74) Vertreter: von Laue, Hanns-Ulrich, Dipl.-Ing.

(56) Entgegenhaltungen:
- EP-A- 0 206 009
- DE-A- 2 925 670
- DE-C- 2 006 386
- US-A- 3 723 796
- US-A- 5 365 137

## Beschreibung

Die Erfindung bezieht sich auf eine elektrische Antriebsvorrichtung mit mehr als einem permanentmagnetisch erregten Rotor und einem elektrisch erregbaren Stator, der für jeden der Rotoren drei Statorpole bildet.

Aus der US 36 51 355 sind Motoren bekannt, die mit mehreren Rotoren versehen sind. Die Rotoren liegen in Magnetfeldern parallelgeschalteter magnetischer Kreise. Die Parallelschaltung der magnetischen Kreise erfolgt in der Weise, daß eine oder mehrere felderzeugende Spulen die Erregerfelder für die Rotoren bilden. Die Rotoren, in diesem Fall die Anker, haben Wicklungen, die über Schleifringe kommutiert werden. Jeder Anker wird selbständig kommutiert und erfordert daher denselben Aufwand wie ein selbständiger Motor.

Auch in der FR 726 584 ist ein Motor mit mehreren Rotoren beschrieben. Dieser Motor ist ein Einphasenmotor, bei dem die Ankerwicklungen auf dem Stator angebracht sind. Die Ankerwicklungen wirken mit permanentmagnetischen Rotoren zusammen. Dieses System ist, da es mit zwei Polschuhen pro Rotor und nur einem Hauptflußpfad arbeitet, ohne Hilfsmaßnahmen sehr instabil. Es sind deshalb Hilfsmaßnahmen der Art vorgesehen, daß im Stator zusätzliche, mit Spulen versehene Hilfspolschuhe angeordnet sind, die einen Anlauf in vorbestimmter Drehrichtung ermöglichen sollen. Der zusätzliche Aufwand durch die Hilfsmaßnahmen, die nur beim Anlauf benötigt werden, vergrößert die Motordimensionen und macht ihn unwirtschaftlich.

Aus der EP- A- 0 206 009 ist eine Antriebsvorrichtung bekannt, die aus zwei oder drei parallelachsig nebeneinander angeordneten Drehstrommotoren besteht, deren Statoren mit je einer, in Nuten liegenden Wicklung versehen und deren Rotoren als Kurzschlußläufer ausgeführt sind. Die Bleche jedes Stators sind mit den entsprechenden Blechen der anderen Statoren einstückig ausgebildet. Die Statorwicklungen sind den Statornuten und den Netzspannungsphasen derart zugeordnet, daß der maximale Magnetfluß an den engsten Stellen des Statorblechpakets möglichst klein gehalten wird.

Beim Antrieb der umlaufenden Messerkränze von Rotationstrockenrasierapparaten ist es üblich, die Antriebsbewegung von einem Motor über ein Getriebe auf mehrere Messerkränze aufzuteilen und zu übertragen. Diese Bauweise eines solchen Antriebes hat eine bedeutende axiale Länge und verursacht störende Geräusche.

Es ist Aufgabe der Erfindung, einen dreiphasigen Elektromotor mit zwei oder drei Rotoren zu schaffen, der bei vorgegebener Laufrichtung und einwandfreiem Anlauf mit drei Ankerspulen auskommt.

Die gestellte Aufgabe ist erfindungsgemäß dadurch gelöst, daß zur Ausbildung eines Dreiphasenmotors mit drei Rotoren jedem Rotor drei Statorpole zugeordnet sind, wobei
- jeweils ein erster Statorpol eines Rotors mit einem ersten Statorpol eines anderen Rotors mittels eines Jocheisens verbunden ist,
- jeweils ein zweiter Statorpol eines Rotors mit einem dritten Statorpol eines anderen Rotors mittels eines Jocheisens verbunden ist,
- letztgenannte drei Jocheisenverbindungen ihrerseits mittels je einem Jocheisen in einem Rückschlußjoch zusammengeführt sind,
- die zum Rückschlußjoch geführten drei Jocheisen von je einer Erregerspule umschlossen sind,
- die ersten, zweiten und dritten Statorpole immer in gleichbleibendem Umfangssinn aufeinanderfolgend angeschlossen sind,
- der Anlauf ohne Hilfsmittel erfolgt.

Auf diese Weise benötigt man für drei gleichsinnig umlaufende Rotoren nur drei Erregerspulen und erreicht einen einwandfreien Anlauf.

Bei einer anderen Ausführungsform der Erfindung ist vorgesehen, daß zur Ausbildung eines Dreiphasenmotors mit zwei Rotoren jedem Rotor drei Statorpole zugeordnet sind, wobei
- die jeweils ersten, zweiten und dritten Statorpole mittels Jocheisen verbunden sind,
- diese Jocheisenverbindungen von Erregerspulen umschlossen sind,
- die ersten, zweiten und dritten Statorpole immer in gleichbleibendem Umfangssinn aufeinanderfolgend angeschlossen sind,
- der Anlauf ohne Hilfsmittel erfolgt.

Auf diese Weise benötigt man für zwei gleichsinnig umlaufende Rotoren nur drei Erregerspulen und erreicht einen einwandfreien Anlauf.

Vorzugsweise ist vorgesehen, daß die Kommutierung der Erregerspulen in beiden Ausführungsformen elektronisch erfolgt.

Bei einem solchen Aufbau wird das Getriebe eingespart, welches die Baulänge vergrößert und Geräusche und Verluste verursacht. Dies ist besonders vorteilhaft für Trockenrasiergeräte.

Die Erfindung wird anhand der Zeichnung näher erläutert. Es zeigen:
Fig. 1 ein Prinzipbild einer elektrischen Antriebsvorrichtung mit drei permanentmagnetisch erregten Rotoren und drei im Stator befindlichen Erregerspulen zur Ausbildung eines Dreiphasenmotors, wobei die drei Rotorenachsen auf einem Kreis und auf Schnittpunkten des Kreises mit drei vom Zentrum her um jeweils 120° divergierenden Radialstrahlen angeordnet sind,
Fig. 2 eine schaubildliche Darstellung des Antriebes nach Fig. 1 mit drei permanentmagnetisch erregten Rotoren und drei Erregerspulen in einer Anordnung mit radial vierpolig magnetisierten Rotorscheiben,
Fig. 3 den Antrieb nach Fig.1 und 2 bei herausgenommenen Rotoren und herausgenommenen Jocheisenstück, welches jeweils einen Statorpol von drei Statorpolanordnungen erbindet,
Fig. 4 den Antrieb nach Fig. 1 in einer Axialflußanordnung
Fig. 5 den Antrieb nach Fig. 4 bei herausgenommenen Rotoren und herausgenommenen Jocheisenstück, welches jeweils einen Statorpol von drei Statorpolanordnungen verbindet,
Fig. 6 ein Prinzipbild einer elektrischen Antriebsvorrichtung mit zwei permanentmagnetisch erregten Rotoren und drei im Stator befindlichen Erregerspulen zur Ausbildung eines Dreiphasenmotors, wobei die zwei Rotorenachsen nebeneinander angeordnet sind,
Fig. 7 eine schaubildliche Darstellung des Antriebes nach Fig. 6 mit zwei permanentmagnetisch erregten Rotoren und drei Erregerspulen in einer Anordnung mit axial vierpolig magnetisierten Rotorscheiben.

Die elektrische Antriebsvorrichtung ist insbesondere für den Antrieb kleiner Drehteile, wie der Messerkränze in den Schermessern von Dreikopfrasierern gedacht. Bisher wurden alle Messerkränze von einem Motor über ein Getriebe gemeinsam angetrieben. Ein solches Getriebe benötigt einerseits relativ viel Platz, andererseits sind mit dem Betrieb eines Getriebes immer ein deutlich hörbares Geräusch und Reibungsverluste verbunden. Mit Hilfe der elektrischen Antriebsvorrichtung ist es möglich, die Rotoren unmittelbar auf die Messerkränze arbeiten zu lassen. Der Scherkopf eines Trockenrasierapparates, bestehend aus beispielsweise zwei oder drei rotierenden Scherköpfen, ist auf diese Weise sehr flach ausbildbar.

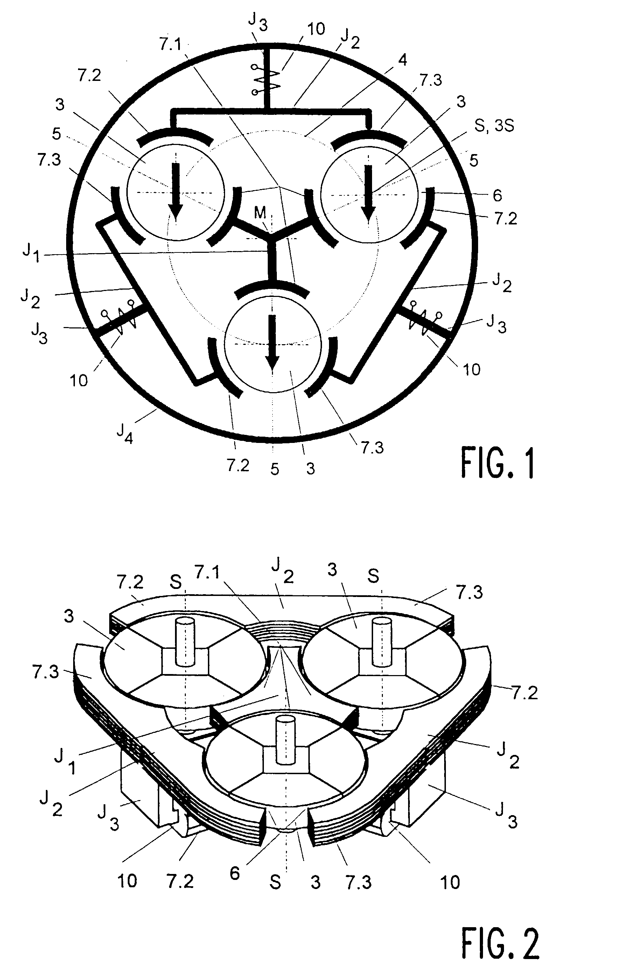

Eine in Fig.1 dargestellte elektrische Antriebsvorrichtung weist drei permanentmagnetisch erregte Rotoren 3 auf, deren Achsen 3S durch Schnittpunkte S zwischen einem Kreis 4 und vom Kreismittelpunkt M um jeweils 120° gegeneinander divergierenden Radialstrahlen 5 hindurch verlaufen. Jedem der zylinderförmigen Rotoren 3 sind getrennt durch Luftspalte 6 am Zylinderumfang drei Statorpole 7.1, 7.2, 7.3 zugeordnet. Drei dieser im Zentrum des Kreises 4 befindlichen Statorpole 7.1 sind mittels Jocheisen J₁ miteinander magnetisch kurzgeschlossen. Die jeweils außerhalb des Kreises 4 befindlichen Statorpole 7.2 und 7.3 sind paarweise miteinander über Jochbrücken J₂ verbunden. Diese Jochbrücken J₂ sind wiederum mit Jocheisen J₃ verbunden, die von Erregerspulen 10 umschlossen sind. Die Jocheisen J₃ sind auf den von den Jochbrücken J₂ abgelegenen Enden alle magnetisch über ein Rückschlußjoch J₄ verbunden. Das Jocheisen J₁, die Statorpole 7.1, 7.2 und 7.3, die sie verbindenden Jochbrücken J₂, die Jocheisen J₃ und das Rückschlußjoch J₄ bestehen aus Massiveisen oder Elektroblech. Die dauermagnetischen Rotoren 3 bestehen aus einem permanentmagnetischen Material und sind diametral magnetisiert.

Es ist nicht erforderlich, daß die Achsen der Rotoren durch einen Kreis gehen. Es sind auch andere gegenseitige Zuordnungen möglich.

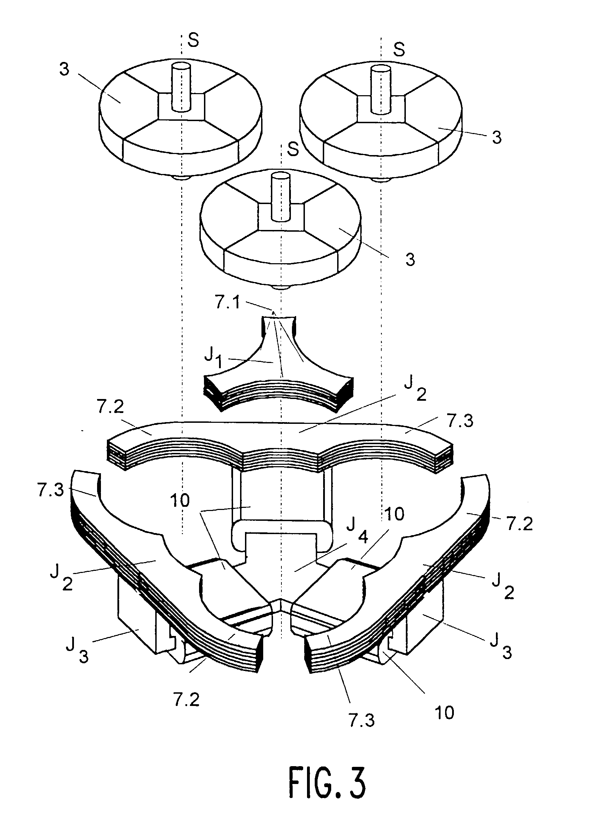

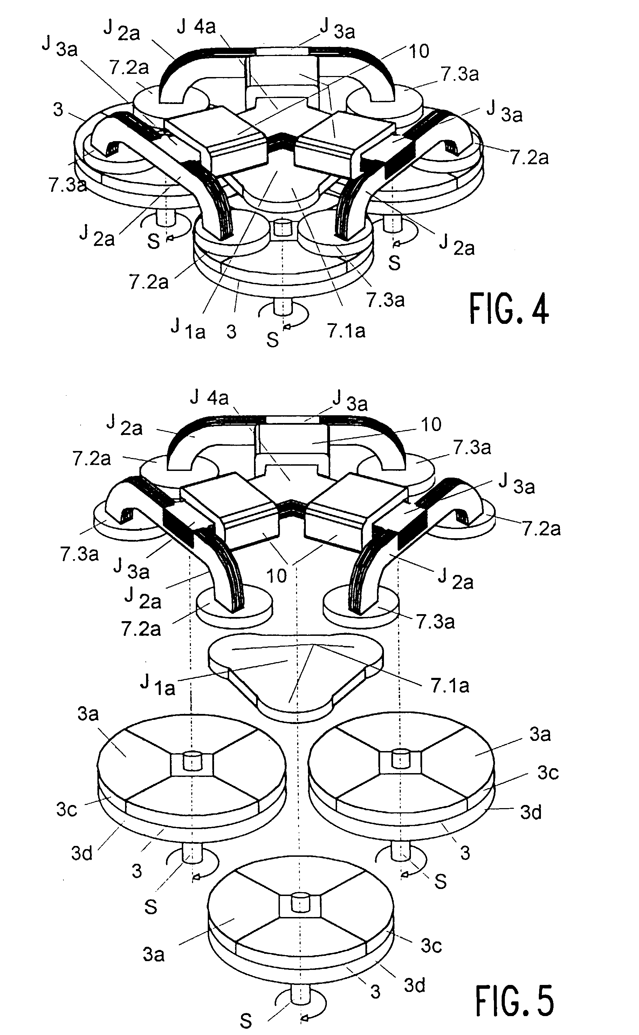

In der Prinzipdarstellung nach Fig.1 sieht der Motor relativ groß aus, ist dies aber in Wirklichkeit nicht. Zur Veranschaulichung der Abmessungen ist in Fig. 2 und 3 eine Ausführungsform des Motors mit Radialflußführung in und in Fig. 4 und 5 eine Ausführungsform Axialflußführung dargestellt.

Jeder Rotor 3 kann sich im Feld der Statorpole 7 drehen. Wie Fig.3 zeigt, sind die Statorpole 7.1 innerhalb des Kreises 4 an miteinander verbundenen Jocheisen J₁ gebildet, die sich magnetisch getrennt unterhalb des zentralen Eisenjoches J₄ befinden. Man erkennt aus Fig.3 die jeweils drei Statorpole 7.1, 7.2, 7.3,zwischen denen die Rotoren 3 umlaufen können. Die Statorpole 7.2 und 7.3 sind jeweils zu den Jochbrücken J₂ geführt, an die sich die Jocheisen J₃ anschließen, die von den Erregerspulen 10 umschlossen sind. Das Zentralstück J₄ stellt dann das Rückschlußjoch zwischen den Jocheisen J₃ dar. Der Übersichtlichkeit wegen sind in Fig. 3 die drei Rotoren 3 und das Jocheisenstück J₁ getrennt von dem restlichem Motoreisen und den Erregerspulen 10 dargestellt.

Die Rotoren 3 bestehen aus am Luftspalt 6 befindlichem, radial zwei- oder vierpolig magnetisiertem Magnetmaterial. In Umfangsrichtung wechseln dabei am Luftspalt Nord- und Südpole ab, es ist möglich, einen Polkern aus weichmagnetischem Eisenmaterial einzusetzen.

Die Fig. 4 und 5 zeigen eine Motorausführung mit Axialflußführung in den Rotoren 3, der aber auch dem Prinzipbild nach Fig. 1 folgt. Die Statorpole 7.1a, 7.2a, 7.3a sind dabei im Abstand des Luftspaltes 6 gegen obere Flankenflächen 3a der Rotoren 3 geführt, so daß sie obere Randbereiche 3b der axial magnetisierten Rotoren überstreichen. Die Statorpole 7.2a, 7.3a sind über Jochbrücken J₂ₐ verbunden. An die Jochbrücken J₂ₐ schließen sich die Jocheisen J₃ₐ an, die von den Erregerspulen 10 umgeben sind. Im Zentrum sind die Jocheisen J₃ₐ wieder über das zentrale Eisenjoch J₄ₐ verbunden.

Die Rotoren 3 bestehen aus jeweils zwei sandwichartig miteinander verbundenen Scheiben 3c, 3d. Die am Luftspalt 6 befindliche Scheibe 3c besteht aus axial zwei- oder vierpolig magnetisiertem Magnetmaterial. In Umfangsrichtung wechseln dabei am Luftspalt Nord- und Südpole ab. Die vom Luftspalt abliegende Scheibe 3d besteht aus weichmagnetischem Eisenmaterial und bildet den Polkern.

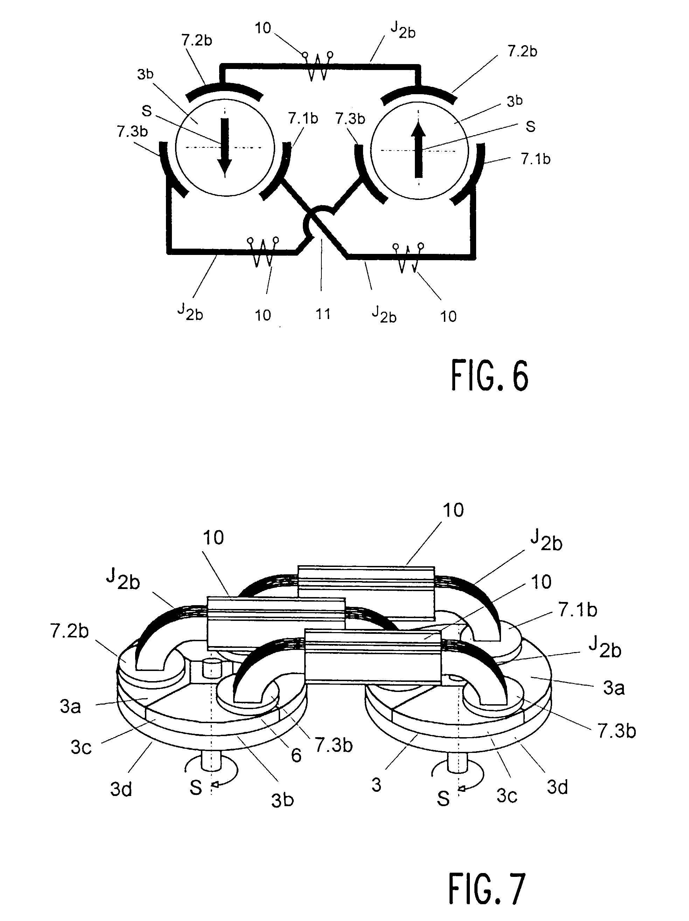

Eine in Fig. 6 dargestellte elektrische Antriebsvorrichtung weist zwei permanentmagnetisch erregte Rotoren 3 auf, deren Achsen 3S im Abstand A nebeneinander angeordnet sind. Jedem der zylinderförmigen Rotoren 3 sind getrennt durch Luftspalte 6 am Zylinderumfang drei Statorpole 7.1b, 7.2b, 7.3b zugeordnet und paarweise miteinander über Jochbrücken J_{2b} verbunden. Diese Jochbrücken J_{2b} sind von Erregerspulen 10 umschlossen. Die Statorpole 7.1b, 7.2b und 7.3b bestehen aus Massiveisen oder Elektroblech. Die dauermagnetischen Rotoren 3 bestehen aus einem permanentmagnetischen Material und sind diametral magnetisiert.

In der Prinzipdarstellung nach Fig. 6 ergibt sich in der Zeichenebene eine Überkreuzungsstelle 11 zweier Jochbrücken J2b, die an dieser Stelle aber magnetisch nicht miteinander verbunden sind. Zur Veranschaulichung der tatsächlichen Gestaltung ist in Fig. 7 eine vierpolige Ausführungsform des Motors mit Axialflußführung dargestellt.

Jeder Rotor 3 kann sich im Feld der Statorpole 7b drehen. Man erkennt aus Fig. 7 die jeweils drei Statorpole 7.1b, 7.2b, 7.3b, zwischen denen die Rotoren 3b umlaufen können.

Die Statorpole 7.1b, 7.2b, 7.3b sind dabei im Abstand des Luftspaltes 6 gegen obere Flankenflächen 3a der Rotoren 3 geführt, so daß sie obere Randbereiche 3b der axial magnetisierten Rotoren überstreichen.

Die Statorpole 7.2b, 7.3b sind über Jochbrücken J_{2b} verbunden, die ihrerseits von den Erregerspulen 10 umgeben sind.

Die zwei Rotoren 3 bestehen aus jeweils zwei sandwichartig miteinander verbundenen Scheiben 3c, 3d. Die am Luftspalt 6 befindliche Scheibe 3c besteht aus axial zwei- oder vierpolig magnetisiertem Magnetmaterial. In Umfangsrichtung wechseln dabei am Luftspalt Nord- und Südpole ab. Die vom Luftspalt abliegende Scheibe 3d besteht aus weichmagnetischem Eisenmaterial und bildet den Polkern.

In Fig. 6 ist der Zwei-Rotoren-Motor als Radialflußmotor dargestellt, während er in Fig. 7 als Axialflußmotor dargestellt ist. Wie bei dem Drei-Rotoren-Motor kann hier auch ganz nach Wunsch eine Radial- oder Axialflußanordnung gewählt werden.

Auf diese Weise lassen sich also den Bedürfnissen entsprechend elektrische Antriebe mit zwei oder drei Rotoren aufbauen. Allen Rotoren ist gemeinsam, daß sie eine Polpaarzahl p = 1 oder 2 aufweisen und entweder axial oder radial magnetisiert sind, je nach den Konstruktionsbedürfnissen.

Die Kommutierung der Erregerspulen erfolgt auf elektronischem Wege.

## Patentansprüche

1. Elektrische Antriebsvorrichtung mit drei permanentmagnetisch erregten Rotoren und einem elektrisch erregbaren Stator, der für jeden der Rotoren (3) Statorpole (7) bildet, dadurch gekennzeichnet, daß zur Ausbildung eines Dreiphasenmotors mit drei Rotoren jedem Rotor drei Statorpole (7) zugeordnet sind, wobei
- jeweils ein erster Statorpol eines Rotors mit einem ersten Statorpol eines anderen Rotors mittels eines Jocheisens verbunden ist,
- jeweils ein zweiter Statorpol eines Rotors mit einem dritten Statorpol eines anderen Rotors mittels eines Jocheisens verbunden ist,
- letztgenannte drei Jocheisenverbindungen ihrerseits mittels je einem Jocheisen in einem Rückschlußjoch zusammengeführt sind,
- die zum Rückschlußjoch geführten drei Jocheisen von je einer Erregerspule umschlossen sind,
- die ersten, zweiten und dritten Statorpole immer in gleichbleibendem Umfangssinn aufeinanderfolgend angeschlossen sind,
- der Anlauf ohne Hilfsmittel erfolgt.

2. Elektrische Antriebsvorrichtung mit zwei permanentmagnetisch erregten Rotoren und einem elektrisch erregbaren Stator, der für jeden der Rotoren (3) Statorpole (7) bildet, dadurch gekennzeichnet, daß zur Ausbildung eines Dreiphasenmotors mit zwei Rotoren (3) jedem Rotor (3) drei Statorpole (7) zugeordnet sind, wobei
- die jeweils ersten, zweiten und dritten Statorpole mittels Jocheisen verbunden sind,
- diese Jocheisenverbindungen von Erregerspulen umschlossen sind,
- die ersten, zweiten und dritten Statorpole immer in gleichbleibendem Umfangssinn aufeinanderfolgend angeschlossen sind,
- der Anlauf ohne Hilfsmittel erfolgt.

3. Elektrische Antriebsvorrichtung nach den Ansprüchen 1 und 2, dadurch gekennzeichnet, daß die Erregerspulen (10) elektronisch kommutiert werden.

4. Elektrische Antriebsvorrichtung nach den Ansprüchen 1 bis 3, dadurch gekennzeichnet, daß die Rotoren (3) radial zwei- oder vierpolig magnetisiert sind.

5. Elektrische Antriebsvorrichtung nach den Ansprüchen 1 bis 3, dadurch gekennzeichnet, daß die Rotoren (3) axial zwei- oder vierpolig magnetisiert sind.

## Claims

1. An electrical driving device comprising three permanent-magnet-excited rotors and an electrically excitable stator which forms three stator poles (7) for each of the rotors (3), characterized in that for the construction of a three-phase motor having three rotors three stator poles (7) are associated with each rotor,
- each first stator pole of a rotor being connected to a first stator pole of another rotor by means of a yoke iron,
- each second stator pole of a rotor being connected to a third stator pole of another rotor by means of a yoke iron,
- the last-mentioned three yoke-iron connections being joined at a return yoke by means of one yoke iron each,
- the three yoke irons joined at the return yoke each being surrounded by an excitation coil,
- the first, second and third stator poles being always positioned in the same circumferential sequence,
- starting being effected without any auxiliary means.

2. An electrical driving device comprising two permanent-magnet-excited rotors and an electrically excitable stator which forms stator poles (7) for each of the rotors (3), characterized in that for the construction of a three-phase motor having two rotors (3), three stator poles (7) are associated with each rotor (3),
- the first, second and third stator poles being connected by means of a yoke iron,
- said yoke-iron connections being surrounded by excitation coils,
- the first, second and third stator poles being always positioned in the same circumferential sequence,
- starting being effected without any auxiliary means.

3. An electrical driving device as claimed in Claims 1 and 2, characterized in that the excitation coils (10) are commutated electronically.

4. An electrical driving device as claimed in Claims 1 to 3, characterized in that the rotors (3) have two-pole or four-pole radial magnetizations.

5. An electrical driving device as claimed in Claims 1 to 3, characterized in that the rotors (3) have two-pole or four-pole axial magnetizations.

## Revendications

1. Dispositif d'entraînement électrique avec trois rotors à excitation par aimant permanent et un stator à excitation électrique qui forme pour chacun des rotors (3) des pôles de stator (7), caractérisé en ce qu'en vue de la conception d'un moteur triphasé avec trois rotors, trois pôles de stator (7) sont affectés à chaque rotor,
- un premier pôle de stator d'un rotor étant relié à un premier pôle de stator d'un autre rotor à l'aide d'une culasse,
- un deuxième pôle de stator d'un rotor étant relié à un troisième pôle de stator d'un autre rotor à l'aide d'une culasse,
- les trois dernières liaisons par culasse, quant à elles, étant reliées à l'aide d'une culasse respective dans une culasse de retour;
- les trois culasses dirigées vers la culasse de retour étant respectivement entourées par une bobine d'excitation,
- les premier, deuxième et troisième pôles de stator étant toujours reliés successivement dans un sens de rotation constant,
- le démarrage intervenant sans moyen auxiliaire.

2. Dispositif d'entraînement électrique avec deux rotors d'excitation par aimant permanent et un stator à excitation électrique qui forme pour chacun des rotors (3) des pôles de stator (7), caractérisé en ce qu'en vue de la conception d 'un moteur triphasé avec deux rotors (3), trois pôles de stator (7) sont affectés à chaque rotor (3)
- les premier, deuxième et troisième pôles de stator étant respectivement reliés à l'aide de culasse,
- ces raccords par culasse étant entourés par des bobines d'excitation,
- les premier, deuxième et troisième pôles de stator étant toujours raccordés successivement dans un sens de rotation constant,
- le démarrage intervenant sans moyen auxiliaire.

3. Dispositif d'entraînement électrique selon les revendications 1 et 2, caractérisé en ce que les bobines d'excitation (10) sont commutées électroniquement.

4. Dispositif d'entraînement électrique selon l'une des revendications 1 à 3, caractérisé en ce que les rotors (3) sont magnétisés radialement de manière bipolaire ou quadripolaire.

5. Dispositif d'entraînement électrique selon l'une des revendications 1 à 3, caractérisé en ce que les rotors (3) sont magnétisés axialement de manière bipolaire ou quadripolaire.
